# EUROPEAN PATENT APPLICATION

(11) **EP 4 625 219 A1**
(43) Date of publication of application: **01.10.2025**
(21) Application number: 25166525.3
(22) Date of filing: 27.03.2025
(51) Int. Cl.: G06F 21/44, G06F 21/57, G07F 19/00, H04L 9/32

(54) **VALUABLE MEDIUM PROCESSING APPARATUS, VALUABLE MEDIUM PROCESSING SYSTEM, AND PROCESSING METHOD**

(30) Priority: 28.03.2024 JP 2024054511
(71) Applicant: GLORY LTD., Himeji-shi Hyogo 670-8567 (JP)
(72) Inventor: OKAMURA, Masao, Hyogo, 670-8567 (JP)
(74) Representative: Biallo, Dario

(57) **Abstract**

A valuable medium processing apparatus according to the present disclosure that includes a secure boot function and executes a first medium process related to a valuable medium, the valuable medium processing apparatus including: a safe in which a container that stores the valuable medium is disposed inside; and a circuit board arranged inside the safe and equipped with a processor, the processor being configured to: execute an execution prohibition process of transmitting a prohibition command of prohibiting execution of a second medium process related to the valuable medium to an execution apparatus that executes the second medium process, and execute a prohibition release process of releasing the prohibition command when a validity of the execution apparatus is confirmed.

## Description

### Technical Field

The present disclosure relates to a valuable medium processing apparatus, a valuable medium processing system, and a processing method.

### Background Art

In a valuable medium processing apparatus that handles valuable media such as banknotes and securities, it is important to enhance the security of software that executes various processes. PTL 1 discloses a technique related to a valuable medium processing apparatus that enhances the security of software operating in a valuable medium processing apparatus. PTL 1 discloses a valuable medium processing apparatus that performs security management using security management information stored in a security chip with high tamper resistance at the time of software boot and software update.

### Citation List

### Patent Literature

### PTL 1

Japanese Patent Application Laid-Open No. 2021-99693

### Summary

### Technical Problem

In a facility (such as a bank) that performs operations using a valuable medium processing apparatus, a plurality of apparatuses each having software for executing an operation may be communicably connected to each other. Further, a plurality of apparatuses each including software that executes different operations may cooperate with each other to perform a series of processes. Further, one apparatus may include a plurality of units each having software that performs different operations such that these units may cooperate with each other to perform a series of processes.

In a system or apparatus that executes various processes with a plurality of software, it is important to ensure the security of each of the plurality of software.

An object of the present disclosure is to enhance security in a valuable medium processing apparatus or system that executes various processes using a plurality of software.

### Solution to Problem

To solve the above-described problems, a valuable medium processing apparatus according to an aspect of the present disclosure has a secure boot function and executes a first medium process related to a valuable medium. The valuable medium processing apparatus comprises a safe in which a container that stores the valuable medium is disposed. The valuable medium processing apparatus comprises a circuit board equipped with a processor. The circuit board may be arranged inside the safe. The processor is configured to execute an execution prohibition process of transmitting a prohibition command of prohibiting execution of a second medium process related to the valuable medium to at least one execution apparatus that executes the second medium process. The processor is configured to execute a prohibition release process of releasing the prohibition command in a case where a validity of the at least one execution apparatus is confirmed. The processer may transmit the command to the plurality of execution apparatuses. The valuable medium processing apparatus and the at least one execution apparatus may be connected to each other in a communicable manner.

The processor may further execute a first authentication process of authenticating a verification apparatus. The processor may further verify the validity of the at least one execution apparatus based on a result of a second authentication process of the execution apparatus. The second authentication process may be executed by the verification apparatus that has succeeded in an authentication in the first authentication process. The valuable medium processing apparatus and the verification apparatus may be connected to each other in a communicable manner. The verification apparatus and the at least one execution apparatus may be connected to each other in a communicable manner.

The authentication of the verification apparatus in the first authentication process may be performed using an digital certificate. The digital certificate may be a public key certificate.

The authentication of the verification apparatus in the first authentication process may be performed by TLS(transport layer security) mutual authentication.

The authentication of the verification apparatus in the first authentication process may be performed using a hash value of predetermined data. The predetermined data may be an image file possessed by the verification apparatus.

In a case where the validity of the execution apparatus is not confirmed in the second authentication process, the processor may execute a notification process of notifying an occurrence of an abnormality in the verification.

The processor may cause the verification apparatus to execute at least one of the execution prohibition process and the prohibition release process.

The circuit board may further equipped with a storage unit. The storage unit may have tamper resistance. The storage unit may be configured to store boot data used for executing the secure boot function.

A valuable medium processing system according to an aspect of the present disclosure comprises a valuable medium processing apparatus having a secure boot function and executing a first medium process related to a valuable medium. The valuable medium processing system may comprise at least one execution apparatus executing a second medium process related to the valuable medium. The valuable medium processing system may comprise a verification apparatus. The valuable medium processing apparatus may execute a first authentication process of authenticating the verification apparatus after booting by the secure boot function. The verification apparatus may start a second authentication process of authenticating the at least one execution apparatus when the first authentication process is successful.

The valuable medium processing apparatus may execute an execution prohibition process of prohibiting an execution of the second medium process by the execution apparatus until the second authentication process by the verification apparatus is completed.

The verification apparatus may perform verification related to a vulnerability of software executed in the execution apparatus as the second authentication process.

The verification apparatus may perform verification related to a version of the software as the verification related to the vulnerability of the software.

The verification apparatus may perform verification related to the vulnerability of the software based on vulnerability information acquired via a public network.

The valuable medium processing apparatus may be connected to the public network via the verification apparatus.

The second medium process executed by the execution apparatus may be a process related to a valuable medium of a type different from the valuable medium processing apparatus.

The execution apparatus may include a user interface used by a user of the valuable medium processing system.

The medium process may include a process of dispensing the valuable medium from the valuable medium processing apparatus or the execution apparatus.

The verification apparatus may execute a third medium process related to the valuable medium.

A processing method according to an aspect of the present disclosure is a method for a valuable medium processing system including a valuable medium processing apparatus having a secure boot function and executing a first medium process related to a valuable medium. The valuable medium processing system may include an execution apparatus executing a second medium process related to the valuable medium. The valuable medium processing system may include a verification apparatus. The processing method comprising executing, by the valuable medium processing apparatus, a first authentication process of authenticating the verification apparatus after the valuable medium processing apparatus is booted by the secure boot function. The processing method may comprise starting, by the verification apparatus, a second authentication process of authenticating the execution apparatus when the first authentication process is successful.

The processing method may comprise executing, by the valuable medium processing apparatus, an execution prohibition process of prohibiting an execution of the second medium process by the execution apparatus until the second authentication process by the verification apparatus is completed.

The processing method may comprise performing, by the verification apparatus, verification related to a vulnerability of software executed in the execution apparatus as the second authentication process.

The processing method may comprise performing, by the verification apparatus, verification related to a version of the software as the verification related to the vulnerability of the software.

The processing method may comprise performing, by the verification apparatus, the verification related to the vulnerability of the software based on vulnerability information acquired via a public network.

In processing method, the second medium process executed by the execution apparatus is a process related to a valuable medium of a type different from the valuable medium in the first medium process.

### Advantageous Effects of Invention

According to the present disclosure, it is possible to enhance security in a valuable medium processing apparatus or system that executes various processes with a plurality of software.

### Brief Description of Drawings

FIG. 1 is a block diagram illustrating an exemplary configuration of a valuable medium processing system according to a first embodiment;
FIG. 2 is a diagram illustrating an exemplary configuration of a valuable medium processing apparatus of the first embodiment;
FIG. 3 is a block diagram illustrating an exemplary functional configuration of the valuable medium processing apparatus;
FIG. 4 is a schematic view illustrating a circuit board provided in the valuable medium processing apparatus;
FIG. 5 is a block diagram schematically illustrating a hardware configuration of a main circuit board;
FIG. 6 is a block diagram illustrating an exemplary functional configuration of a verification apparatus;
FIG. 7 is a block diagram illustrating an exemplary functional configuration of an execution apparatus;
FIG. 8 is a flowchart for describing an operation example of the valuable medium processing system;
FIG. 9 is a diagram illustrating an example of whether the function of each apparatus is prohibited depending on the type of abnormality in an operation prohibition process; and
FIG. 10 is a block diagram illustrating an exemplary functional configuration of a valuable medium processing apparatus according to a second embodiment.

### Description of Embodiments

The embodiments of the present disclosure will be described in detail with reference to the drawings. However, unnecessarily detailed descriptions, such as detailed descriptions of well-known matters or redundant descriptions of substantially identical configurations, may be omitted.

### First Embodiment

### System Configuration

In the first embodiment, a valuable medium processing system 100, which is an example of a valuable medium processing system of the present disclosure, will be described.

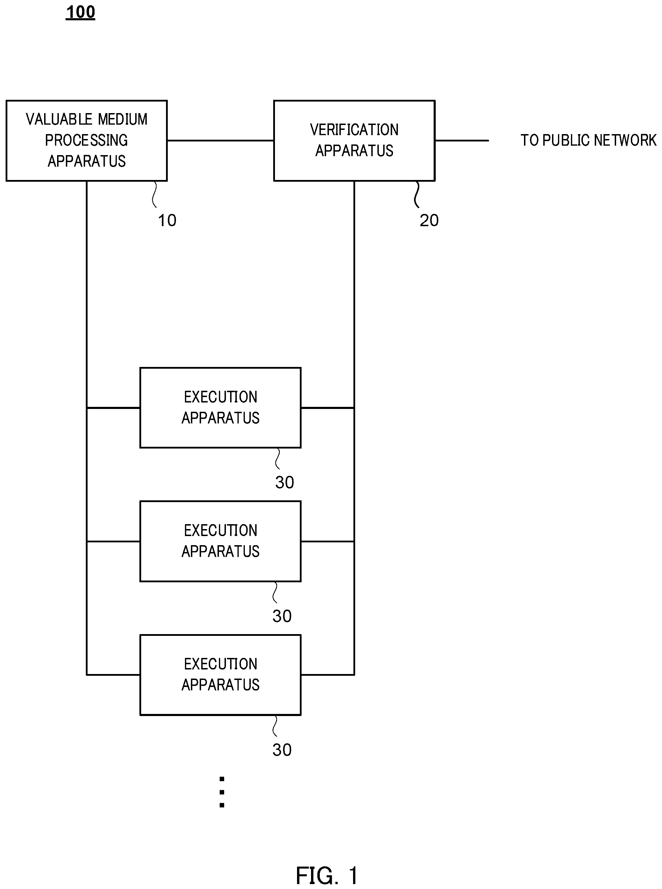

FIG. 1 is a block diagram illustrating an exemplary configuration of the valuable medium processing system 100 according to the first embodiment. The valuable medium processing system 100 includes a valuable medium processing apparatus 10, a verification apparatus 20, and an execution apparatus 30. In the example illustrated in FIG. 1, the valuable medium processing system 100 includes three execution apparatuses 30.

The valuable medium processing apparatus 10 and the verification apparatus 20, the valuable medium processing apparatus 10 and each execution apparatus 30, and the verification apparatus 20 and each execution apparatus 30 are connected to each other in a communicable manner. The valuable medium processing apparatus 10 and each execution apparatus 30 may be indirectly connected to each other via the verification apparatus 20. Further, the valuable medium processing apparatus 10 is connected to an external public network (for example, the Internet) via the verification apparatus 20. In other words, the valuable medium processing apparatus 10 is not connected to the public network without passing through the verification apparatus 20.

In the present disclosure, a valuable medium is a medium of various types that has value. As an example, the valuable medium includes banknotes, coins, and various securities. For example, the valuable securities include checks, gift certificates, and stock certificates.

The valuable medium processing apparatus 10 is an apparatus that executes various processes related to valuable media. In the present embodiment, the valuable medium processing apparatus 10 executes a process related to banknotes as an example. In the following description, the process related to a valuable medium may be referred to as medium process. The medium process executed by the valuable medium processing apparatus 10 is an example of the first medium process of the present disclosure.

The valuable medium processing apparatus 10 may be, for example, a change machine or the like. The valuable medium processing apparatus 10 may be installed in various stores or public facilities such as a retail store, a station, a bank, or the like, for example.

The medium process executed by the valuable medium processing apparatus 10 includes, for example, a deposit process of depositing a banknote into the valuable medium processing apparatus 10 and a dispensing process of dispensing a banknote from the valuable medium processing apparatus 10.

The valuable medium processing apparatus 10 has a secure boot function. The secure boot function is a function that prevents unauthorized software from being executed during booting to ensure a safe boot.

The valuable medium processing apparatus 10 executes a first authentication process of authenticating the verification apparatus 20 after booting in a secure state by the secure boot function. The first authentication process is a process of verifying the validity of the targeted verification apparatus 20. The first authentication process may be a mutual authentication process in which the valuable medium processing apparatus 10 and the verification apparatus 20 authenticate each other. Further, the valuable medium processing apparatus 10 executes an execution prohibition process of prohibiting the execution of processing in the execution apparatus 30 after booting in a secure state by the secure boot function. The execution prohibition process is continued until the authentication of the verification apparatus 20 is successful in the first authentication process and further until the authentication of the execution apparatus is completed in the second authentication process described later.

The verification apparatus 20 is an apparatus that executes the second authentication process of authenticating the execution apparatus 30. The second authentication process is a process of verifying the validity of the target execution apparatus 30. The verification apparatus 20 may be an example of the verification unit of the present disclosure. The verification apparatus 20 may be installed, for example, in a system management room or the like that is easily accessible for a system administrator of the valuable medium processing system 100. The verification apparatus 20 may be a valuable medium processing apparatus that executes the medium process related to a valuable medium. The medium process executed by the verification apparatus 20 is an example of the second medium process of the present disclosure.

The verification apparatus 20 performs the second authentication process for the execution apparatus 30 in a case where the authentication is successful after the execution of the first authentication process by the valuable medium processing apparatus 10. The second authentication process may be a mutual authentication process in which the verification apparatus 20 and the execution apparatus 30 authenticate each other. Note that the second authentication process may include verification of vulnerabilities in the software executed in the execution apparatus 30. More specifically, the second authentication process may include verification related to the version of the software executed in the execution apparatus 30. Further, the second authentication process may include verification of a software vulnerability based on vulnerability information acquired at the time of verification from a vulnerability information database outside the system via a public network. The verification apparatus 20 may perform one or both of verification related to the version of the software executed in the execution apparatus 30 and verification related to the vulnerability of the software based on vulnerability information acquired at the time of verification from a vulnerability information database via a public network, as the second authentication process.

The execution apparatus 30 may be a valuable medium processing apparatus that executes the medium process related to a valuable medium. The medium process executed by the execution apparatus 30 is an example of the second medium process of the present disclosure. The execution apparatus 30 may be an example of the execution unit of the present disclosure. The medium process executed by the execution apparatus 30 includes, for example, a deposit process of depositing a banknote into the execution apparatus 30, a dispensing process of dispensing a banknote from the execution apparatus 30, a dispensing instruction process of instructing the dispensing of a banknote to the valuable medium processing apparatus 10, a display process of displaying information on a valuable medium, an input process of receiving an operation input related to a valuable medium, and the like.

Specific examples of the execution apparatus 30 include another valuable medium processing apparatus independent of the valuable medium processing apparatus 10, a management apparatus that instructs the valuable medium processing apparatus 10 to execute a medium process, or a peripheral apparatus such as a card reader that reads and writes various information related to a valuable medium to and from a card-type memory, a display device that displays various information related to a valuable medium, a printer apparatus that prints various information related to a valuable medium, or an operation device that receives user's operations.

The execution apparatus 30 may be installed in various stores or public facilities as with the valuable medium processing apparatus 10, for example.

A plurality of execution apparatuses 30 may be provided in the valuable medium processing system 100. The plurality of execution apparatuses 30 may be different apparatuses from each other and may execute different types of medium processing. Each of the plurality of execution apparatuses 30 may execute a medium process related to a type of medium different from that in the medium process executed by the valuable medium processing apparatus 10. For example, the valuable medium processing apparatus 10 may execute a medium process related to banknotes, one of execution apparatuses 30 may execute a medium process related to coins, and another the execution apparatus 30 may execute a medium process related to checks.

Each of the valuable medium processing apparatus 10, the verification apparatus 20, and the execution apparatus 30 may be an apparatus independent of each other. Further, the valuable medium processing apparatus 10, the verification apparatus 20, and the execution apparatus 30 may be assembled integrally to constitute a system such as an ATM (Automatic Teller Machine).

As described above, the execution of the medium process in the execution apparatus 30 is prohibited by the execution prohibition process of the valuable medium processing apparatus 10 from immediately after the boot of the execution apparatus 30 until the completion of the second authentication process of the verification apparatus 20. The type of medium process for which execution is prohibited by the execution prohibition process is not limited, but the execution of the dispensing process is particularly strongly prohibited. Thus, it is possible to prevent the execution apparatus 30 from performing the medium process using valuable media in a state where a secure boot of the execution apparatus 30 has not been confirmed, thereby preventing a situation in which valuable media is illegally dispensed.

### Valuable Medium Processing Apparatus 10

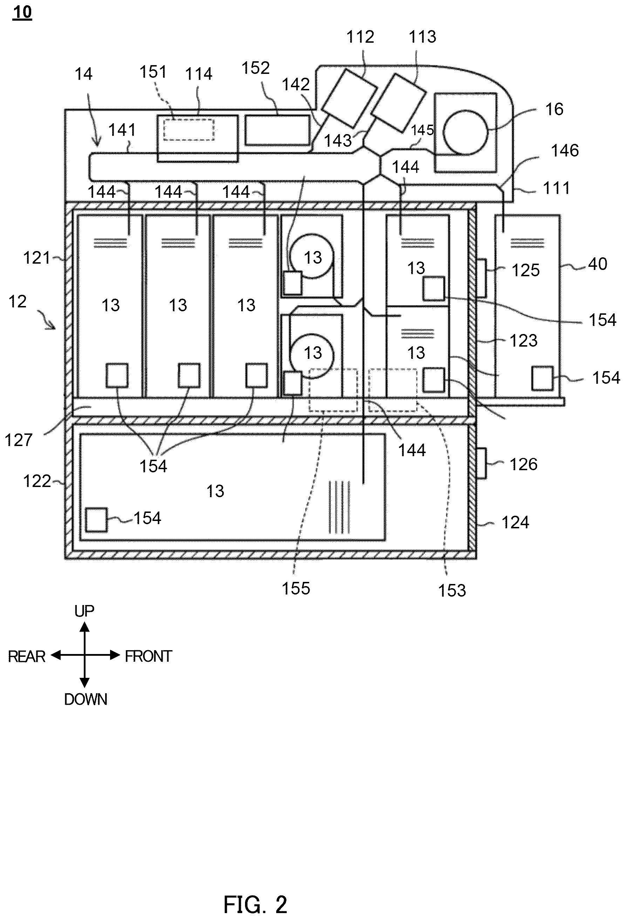

FIG. 2 is a diagram illustrating an exemplary configuration of the valuable medium processing apparatus 10. In the following description, the side on which a first door 123 described later is provided may be referred to as the front, and the side opposite to the side on which the first door 123 is provided may be referred to as the rear.

In the example illustrated in FIG. 2, the valuable medium processing apparatus 10 executes the medium process related to loose banknotes. The valuable medium processing apparatus 10 includes a processing unit 11 on the upper side and a safe 12 on the lower side. The safe 12 includes a first safe unit 121 and a second safe unit 122.

The processing unit 11 includes an upper housing 111. In the upper housing 111, a deposit unit 112, a dispensing unit 113, a recognition unit 114, and a part of the transport path are disposed.

The interior of the safe 12 is divided into two regions. In the safe 12, a container 13, a part of the transport path, and a main circuit board 155 described later are provided. The safe 12 protects the container 13 and the main circuit board 155 at a security level equal to or higher than a predetermined level. The security level of the safe 12 is higher than that of the upper housing 111.

The safe 12 includes the first door 123 and a second door 124. The first door 123 is provided with an electronic lock 125. The electronic lock 125 is usually locked. When the system administrator unlocks the electronic lock 125, the first door 123 is set to an openable state. The container 13 of the first safe unit 121 is drawn out to the front of the valuable medium processing apparatus 10 with the first door 123 open.

An electronic lock 126 is provided at the second door 124. The electronic lock 126 is normally locked. When the system administrator unlocks the electronic lock 126, the second door 124 is set to an openable state. The container 13 of the second safe unit 122 is drawn out to the front of the valuable medium processing apparatus 10 with the second door 124 open.

A system administrator with special authority can unlock the electronic lock 125 and the electronic lock 126. The authority necessary to unlock the electronic lock 125 and the authority necessary to unlock the electronic lock 126 may not be the same.

The deposit unit 112 is a unit into which a banknote to be deposited is inserted in a depositing process of depositing the banknote into a container described later, for example. The deposit unit 112 holds a plurality of banknotes in a stacked state. The deposit unit 112 includes a mechanism for taking in banknotes one by one into the apparatus.

The dispensing unit 113 is a unit that holds a banknote to be dispensed in a dispensing process of dispensing the banknote from a container described later, for example. The dispensing unit 113 holds a plurality of banknotes in a stacked state. The user of the valuable medium processing apparatus 10 can take out the banknote from the dispensing unit 113 by hand. Note that the user of the valuable medium processing apparatus 10 includes a general user such as a customer of a store in which the valuable medium processing apparatus 10 is installed, in addition to a system administrator.

The recognition unit 114 is provided in a loop transport path 141 described later. The recognition unit 114 detects a banknote that is conveyed along the loop transport path 141. The recognition unit 114 acquires an image of each detected banknote. The recognition unit 114 recognizes at least authenticity, denomination, and defect using the acquired image. The recognition unit 114 acquires the serial number of the banknote.

The container 13 stores banknotes. The container 13 stores banknotes by a stacking method (a method of stacking banknotes) or a tape method (a method of winding banknotes with a tape), for example.

Each of the plurality of containers 13 is provided inside the first safe unit 121 or the second safe unit 122 of the safe 12. The plurality of containers 13 may include a storage cassette that is detachable from the valuable medium processing apparatus 10. At least one of the containers 13 provided in the first safe unit 121 is supported by a support unit 127. The support unit 127 has, for example, a rail structure, and can move forward while supporting the container 13 with the first door 123 open. Thus, the container 13 of the first safe unit 121 is drawn out to the front of the valuable medium processing apparatus 10.

A sensor for detecting the passage of a banknote is attached to the entrance and exit of the container 13. A control unit 15 described later counts the number of banknotes that have entered the container 13 and the number of banknotes that have exited the container 13 based on the detection signal from the sensor. The control unit 15 manages the number of banknotes stored in the container 13 based on the counted number of banknotes.

A transport unit 14 transports the banknote within the valuable medium processing apparatus 10. The transport unit 14 includes a transport path. The transport path is constituted by a combination of a large number of rollers, a plurality of belts, a motor for driving these, and a plurality of guides, although not illustrated. The transport unit 14 transports the banknotes one by one with a gap therebetween along the transport path in the state where the long edge of the banknote faces forward, for example. The transport unit 14 may transport the banknote with the short edge facing forward.

The transport unit 14 includes the loop transport path 141. The loop transport path 141 is provided in the upper housing 111. The transport unit 14 transports the banknote along the loop transport path 141 in the clockwise direction and the counterclockwise direction in FIG. 1.

The deposit unit 112 is connected to the loop transport path 141 via a connection path 142. The dispensing unit 113 is connected to the loop transport path 141 via a connection path 143.

Each container 13 is connected to the loop transport path 141 via a connection path 144. The connection path 144 extends in the up-down direction across the processing unit 11 and the first safe unit 121. A part of the connection path 144 extends in the up-down direction across the processing unit 11, the first safe unit 121, and the second safe unit 122. The transport unit 14 transports banknotes from the loop transport path 141 to each of containers 13 via the connection path 144. The transport unit 14 transports banknotes from each of containers 13 to the loop transport path 141 via the connection path 144.

A temporary holding unit 16 is provided in the upper housing 111. The temporary holding unit 16 temporarily stores the banknote. The temporary holding unit 16 can be used for various purposes. The temporary holding unit 16 is disposed on the front side in the upper housing 111. The temporary holding unit 16 is connected to the loop transport path 141 via a connection path 145.

A safe outer container 40 can be attached to the valuable medium processing apparatus 10. The safe outer container 40 can be detached from the valuable medium processing apparatus 10. The safe outer container 40 is a detachable container. The safe outer container 40 is connected to the loop transport path 141 via a connection path 146.

The valuable medium processing apparatus 10 includes a user interface (UI) unit. The UI unit includes an operation unit (such as a keyboard, a trackball, or a touch panel). The user can give various instructions to the valuable medium processing apparatus 10 by operating the operation unit.

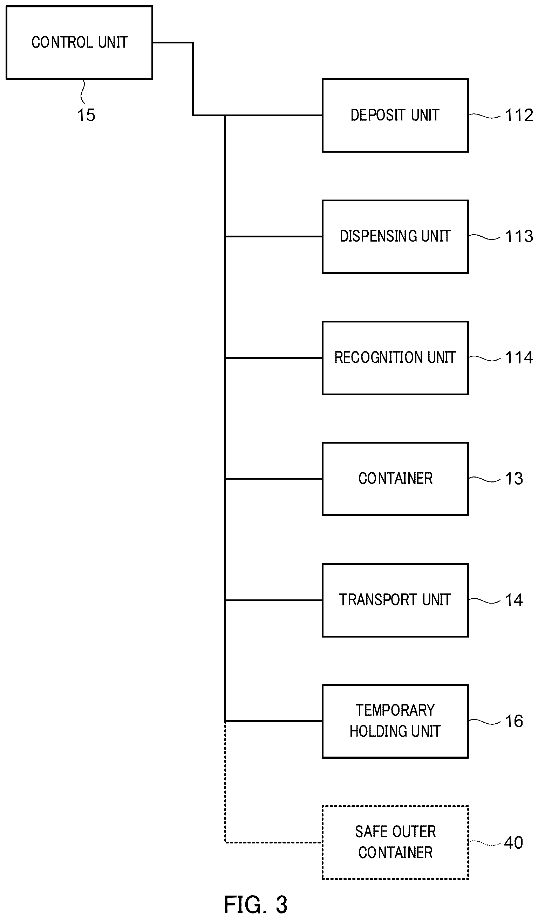

The valuable medium processing apparatus 10 includes the control unit 15. FIG. 3 is a block diagram illustrating an exemplary functional configuration of the valuable medium processing apparatus 10. The control unit 15 is connected to the deposit unit 112, the dispensing unit 113, the recognition unit 114, the container 13, the transport unit 14, and the temporary holding unit 16. When the safe outer container 40 is attached to the valuable medium processing apparatus 10, the safe outer container 40 may be connected to the control unit 15.

When the user instructs the execution of various medium processes through the UI unit, the control unit 15 outputs a signal to at least one of the deposit unit 112, the dispensing unit 113, the recognition unit 114, the container 13, the transport unit 14, the temporary holding unit 16, and the safe outer container 40 to execute the processing corresponding to the instruction, for example.

### Hardware Configuration of Control Unit 15

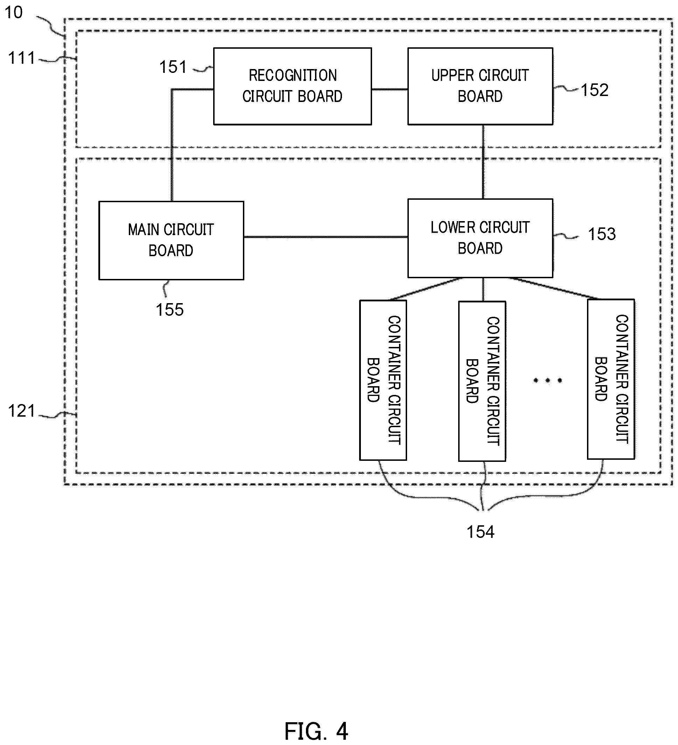

The control unit 15 is implemented by a plurality of processors that execute various software. In the valuable medium processing apparatus 10, these processors are mounted on five separate circuit boards. FIG. 4 is a schematic view illustrating a circuit board provided in the valuable medium processing apparatus 10.

As illustrated in FIG. 4, the valuable medium processing apparatus 10 includes a recognition circuit board 151, an upper circuit board 152, a lower circuit board 153, a container circuit board 154, and the main circuit board 155. The main circuit board 155 may be an example of the circuit board of the present disclosure.

The recognition circuit board 151 and the upper circuit board 152 are provided in the upper housing 111.

The lower circuit board 153, the container circuit board 154, and the main circuit board 155 are provided in the safe 12. More specifically, the lower circuit board 153 and the main circuit board 155 are provided in the first safe unit 121. That is, the main circuit board 155 is installed in a location where the release of the electronic lock 125 is required in order to access the main circuit board 155. The container circuit board 154 is provided in each of containers 13.

Each circuit board includes a storage device, a processor, and a communication interface. The storage device is constituted by a semiconductor memory such as a random access memory (RAM), a read only memory (ROM), an embedded multi media card (eMMC), or a solid state drive (SSD). The storage device stores various data and software. The processor reads and executes various software from the storage device.

The communication interface performs communication based on a predetermined communication standard such as Universal Serial Bus (USB) or RS-422.

In the valuable medium processing apparatus 10, the main circuit board 155 exhibits a security management function in the valuable medium processing apparatus 10. The main circuit board 155 is characterized by a hardware configuration for implementing a security management function.

### Hardware Configuration of Main Circuit board 155

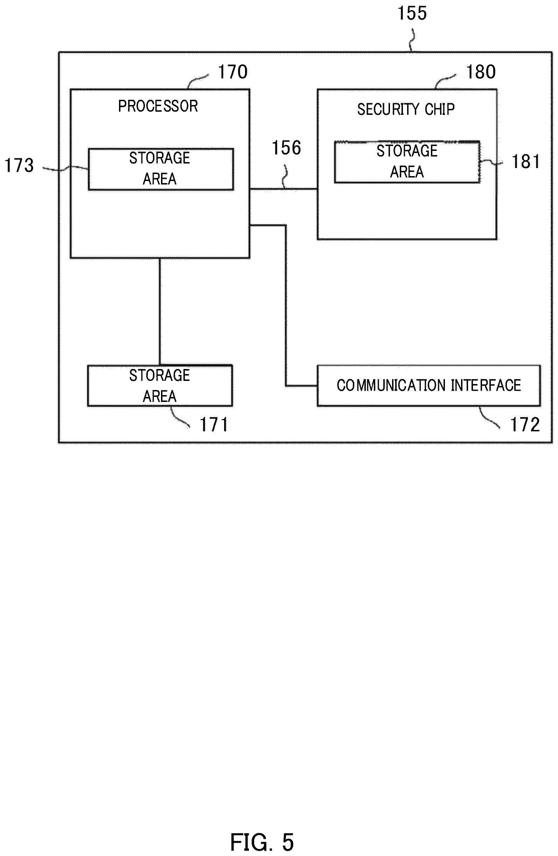

FIG. 5 is a block diagram schematically illustrating a hardware configuration of the main circuit board 155. The main circuit board 155 includes a processor 170, a storage device 171, a communication interface 172, and a security chip 180.

The processor 170 executes software in the storage device 171 as with the processor (microcomputer) of another circuit board. The processor 170 is embedded with code (hereinafter referred to as internal code) that is executable by the processor 170 itself. The processor 170 is configured such that the internal code cannot be changed. In other words, a third party cannot tamper with the internal code. The processor 170 executes the internal code at the time of boot of the processor 170.

The processor 170 is provided with a storage area 173 that holds predetermined information (digital data). The storage area 173 is configured such that once written, the content cannot be changed. It is impossible to tamper with the information in the storage area 173.

Before the valuable medium processing apparatus 10 is shipped (for example, at the time of manufacturing the valuable medium processing apparatus 10), the manufacturer of the valuable medium processing apparatus 10 writes information into the storage area 173. The information written into the storage area 173 and a way of using the information will be described later.

The security chip 180 is a semiconductor device with tamper resistance. The term "tamper resistance" refers to a characteristic with which data recorded inside is difficult to be analyzed, read, or tampered with from the outside. The security chip 180 may employ a security chip, which is a trusted platform module (TPM), that complies with the security specifications defined by the trusted computing group (TCG). The security chip 180 is provided with a storage device 181 as a storage unit that holds predetermined information (digital data).

The security chip 180 is connected to the processor 170 via a bus 156. In order to access (write, read) the security chip 180 from the processor 170, a predetermined authentication code is required.

The security chip 180 has a function of storing a plurality of cryptographic keys. Further, the security chip 180 includes a function of calculating a hash value. The storage device 181 as the storage unit may store data for authenticating software in the storage device 171. The data for authenticating the software is, for example, a hash value of the software.

The storage device 171 has the same configuration as a storage device provided in another circuit board. The storage device 171 may be configured with a plurality of types of devices (for example, eMMC and ROM). In the present embodiment, the storage device 171 of the main circuit board 155 includes an eMMC. The storage device 171 stores basic software and application software.

The communication interface 172 has the same configuration as the communication interface provided in another circuit board.

### Functional Configuration of Control Unit 15

In the valuable medium processing apparatus 10, various functions of the control unit 15 are implemented when the processor of each circuit board executes various software.

The recognition circuit board 151 controls the recognition unit 114 and outputs the recognition result when the processor executes predetermined software. For example, the recognition circuit board 151 recognizes the authenticity, denomination, and genuineness of a banknote based on an image of the banknote. The recognition circuit board 151 is connected to the upper circuit board 152 via a communication interface. The recognition circuit board 151 outputs the recognition result to the upper circuit board 152 via the communication interface.

The upper circuit board 152 controls operations of the deposit unit 112, the dispensing unit 113, the transport unit 14, and the temporary holding unit 16 when the processor executes predetermined software. For example, the upper circuit board 152 controls a driving mechanism (motor) or the like provided in the transport unit 14 or the like. Further, the upper circuit board 152 receives an instruction from the user via the UI unit.

The container circuit board 154 is provided for each container 13. The storage device of each the container circuit board 154 stores the door opening/closing log and the ID of the corresponding container 13. These storage devices may store at least one of the type and the number of stored banknotes.

The container circuit board 154 is connected to the lower circuit board 153 via a communication interface. The container circuit board 154 transmits the ID and the information of the door opening/closing log to the lower circuit board 153 via the communication interface in response to a request from the lower circuit board 153.

The lower circuit board 153 controls each container 13 and the transport unit 14 when the processor executes predetermined software. The lower circuit board 153 collects the ID and log data of the container 13.

The lower circuit board 153 is connected to the upper circuit board 152 via a communication interface. In a case where the lower circuit board 153 controls the transport unit 14, the lower circuit board 153 sends a predetermined signal (instruction) to the upper circuit board 152 via a communication interface.

The main circuit board 155 is responsible for the boot of the valuable medium processing apparatus 10, communication with the outside of the valuable medium processing apparatus 10, and management of various software when the processor executes predetermined software. The storage device 171 of the main circuit board 155 is loaded with basic software (so-called OS (Operation System)).

The main circuit board 155 implements a secure boot function that starts the basic software of the valuable medium processing apparatus 10 in a secure state using boot data stored in the security chip 180 having tamper resistance. The boot data is, for example, a hash value of the basic software, and is used as an authentication value for verifying the validity of the basic software. The boot data may include a value that counts the number of valid accesses to the security chip 180. Specifically, when the system administrator turns on the power button or the like of the valuable medium processing apparatus 10, the main circuit board 155 executes the boot process using the secure boot function. When the boot is completed, the main circuit board 155 is allowed to execute various subsequent processes in the valuable medium processing apparatus 10.

In the valuable medium processing apparatus 10, the main circuit board 155 is provided inside the first safe unit 121, and therefore a third party cannot access the main circuit board 155. For this reason, it is impossible for a third party to rewrite the boot data necessary for executing the secure boot function, and it is also impossible to perform any operation on the processor 170 that executes the secure boot function. Further, the main circuit board 155 boots the basic software of the valuable medium processing apparatus 10 by a secure boot function using boot data stored in the storage device 181 of the security chip 180 having tamper resistance, and thus, the valuable medium processing apparatus 10 can be booted in a secure state.

The main circuit board 155 is connected to the lower circuit board 153 via the communication interface 172. Between the main circuit board 155 and the lower circuit board 153, transmission and reception of log data, update files, and the like are performed.

The main circuit board 155 is connected to the recognition circuit board 151 via the communication interface 172. The main circuit board 155 transmits the recognition data to the recognition circuit board 151 and receives the banknote image data from the recognition circuit board 151. The recognition data is data for recognizing the authenticity, denomination, and condition of a banknote. The banknote image data is image data of a banknote acquired in the recognition circuit board 151.

The main circuit board 155 is connected to the verification apparatus 20 and the execution apparatus 30 via the communication interface 172. The main circuit board 155 is connected to a public network such as the Internet via the verification apparatus 20. **In** other words, the main circuit board 155 cannot communicate with a public network without going through the verification apparatus 20.

The main circuit board 155 executes an execution prohibition process of prohibiting the execution of medium process executed by the execution apparatus 30, which has already been booted, after the booting with the secure boot function.

The main circuit board 155 executes the first authentication process and authenticates the verification apparatus 20 after the booting with the secure boot function. As the first authentication process, mutual authentication between the valuable medium processing apparatus 10 and the verification apparatus 20 may be performed. An example of the first authentication process is transport layer security (TLS) mutual authentication using the TLS protocol. TLS mutual authentication is an authentication method in which the valuable medium processing apparatus 10 and the verification apparatus 20 perform mutual authentication by matching pre-issued digital certificates. The digital certificate may be stored in the storage device 181 as a storage unit.

Further, as an example of the first authentication process, the authentication of the verification apparatus 20 may be performed by confirming a hash value of predetermined data, e.g., a predetermined image file. The hash value may be stored in the storage device 181 as a storage unit.

When the second authentication process for the execution apparatus 30 by the verification apparatus 20 is completed after the first authentication process for the verification apparatus 20 is completed and it is confirmed that the verification apparatus 20 is in a secure state, the main circuit board 155 executes a prohibition release process of releasing the execution prohibition of the medium processing for the execution apparatus 30;

### Verification Apparatus 20

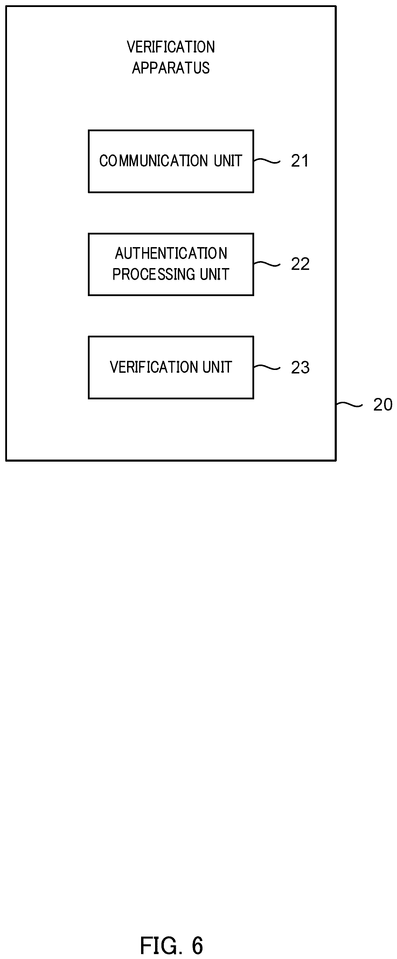

The verification apparatus 20 is, for example, a computer such as a PC, a workstation, or a tablet terminal. FIG. 6 is a block diagram illustrating an exemplary functional configuration of the verification apparatus 20. The verification apparatus 20 includes a communication unit 21, an authentication processing unit 22, and a verification unit 23. The verification apparatus 20 may be a valuable medium processing apparatus including a computer.

The communication unit 21 is a communication interface that transmits and receives various information between the valuable medium processing apparatus 10, the execution apparatus 30, and a public network.

On the condition that the verification apparatus 20 has been authenticated by the first authentication process of the valuable medium processing apparatus 10 that has been booted by the secure boot function, the authentication processing unit 22 of the verification apparatus 20 executes the second authentication process for the execution apparatus 30. The second authentication process is performed using TLS mutual authentication in the same manner as the first authentication process, for example. The authentication processing unit 22 may perform the second authentication process for each of the plurality of execution apparatuses 30. The authentication processing unit 22 transmits the authentication result related to the execution apparatus 30 to the valuable medium processing apparatus 10 via the communication unit 21.

The second authentication process may include verification of the vulnerability of the execution apparatus 30 by the verification unit 23. The verification unit 23 may verify the vulnerability of the execution apparatus 30 following the authentication process by the authentication processing unit 22 or in parallel with the authentication process by the authentication processing unit 22.

The verification of the vulnerability of the execution apparatus 30 by the verification unit 23 is, for example, verification of the vulnerability of software (for example, firmware or an application) executed in the execution apparatus 30. The verification unit 23 acquires version information on the version of the firmware executed in the execution apparatus 30 via a public network such as the Internet, for example, and determines that there is no vulnerability in the execution apparatus 30 in a case where it is confirmed that the version of the firmware currently used in the execution apparatus 30 is newer than a predetermined version. The version information of the firmware executed in the execution apparatus 30 is, for example, published by a manufacturer that manufactures the execution apparatus 30, and the verification unit 23 may acquire the version information via the Internet.

Alternatively, the verification of the vulnerability of the execution apparatus 30 by the verification unit 23 is performed based on vulnerability information acquired from a vulnerability information database published on the Internet, for example. The verification unit 23 matches the software bill of materials (SBOM) information of the software executed in the execution apparatus 30 with the vulnerability information acquired from the vulnerability information database, and verifies whether the software executed in the execution apparatus 30 has a vulnerability. Examples of vulnerability information databases include the national vulnerability database (NVD) managed by the national institute of standards and technology (NIST).

The verification unit 23 may perform vulnerability verification for each of the plurality of execution apparatuses 30. The verification unit 23 transmits the authentication result including the verification result of the vulnerability related to each execution apparatus 30 to the valuable medium processing apparatus 10 via the communication unit 21. Further, the verification unit 23 may perform verification of the vulnerability of the valuable medium processing apparatus 10.

### Execution Apparatus 30

The execution apparatus 30 is an apparatus that executes the medium process related to a valuable medium. The execution apparatus 30 may include, for example, a user interface used by a user of the valuable medium processing system.

Examples of the medium process include a depositing or dispensing process of valuable media, a writing or reading process of various information related to valuable media, a displaying process of various information related to valuable media, and an operation reception process of outputting a control signal to control the valuable medium processing apparatus 10 or the like by receiving a user's operation.

In a case where the valuable medium processing system 100 includes a plurality of execution apparatuses 30, each of the plurality of execution apparatuses 30 may execute a different type of medium process. In particular, when the execution apparatus 30 is another valuable medium processing apparatus independent of the valuable medium processing apparatus 10, the execution apparatus 30 may execute a medium process using a valuable medium of a type different from that of the valuable medium processing apparatus 10. Specifically, in a case where the valuable medium processing apparatus 10 executes the medium process related to banknotes, the execution apparatus 30 may execute a medium process related to coins.

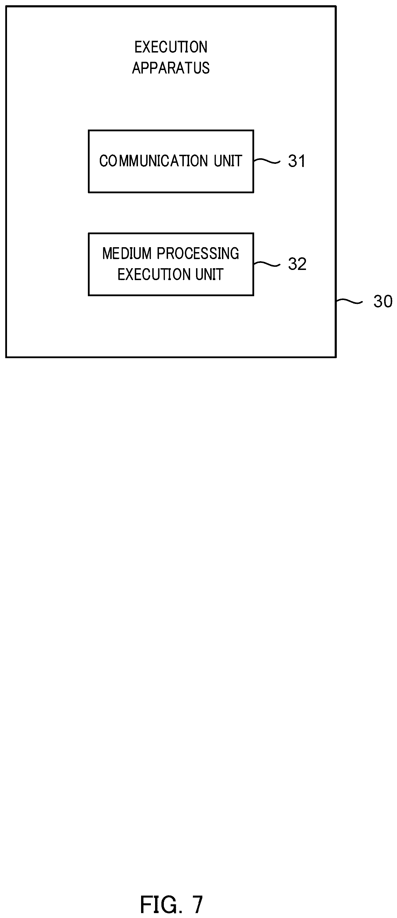

FIG. 7 is a block diagram illustrating an exemplary functional configuration of the execution apparatus 30. The execution apparatus 30 includes a communication unit 31 and a medium processing execution unit 32.

The communication unit 31 is a communication interface that transmits and receives various information between the valuable medium processing apparatus 10 and the verification apparatus 20. At least one of execution apparatuses 30 may be connected to a public network such as the Internet without passing through the verification apparatus 20.

The medium processing execution unit 32 executes a predetermined type of medium process for each execution apparatus 30. After the boot of the execution apparatus 30, the medium processing execution unit 32 cannot execute the medium process due to the execution prohibition process of the valuable medium processing apparatus 10 until the second authentication process by the verification apparatus 20 is completed and the authentication is performed. When the execution apparatus 30 is authenticated by the verification apparatus 20 and the prohibition release process by the valuable medium processing apparatus 10 is executed, the medium processing execution unit 32 can execute the medium processing thereafter. In addition to the authentication by the second authentication process, the medium processing execution unit 32 may prevent the execution prohibition process from being released until the verification of the vulnerability described above is completed. For example, the medium processing execution unit 32 may not execute the subsequent medium process when the medium processing execution unit 32 receives an execution prohibition command from the valuable medium processing apparatus 10 via the communication unit 31, whereas the medium processing execution unit 32 may execute the subsequent medium process when the medium processing execution unit 32 receives a prohibition release command from the valuable medium processing apparatus 10.

### Operation Example of Valuable Medium Processing System 100

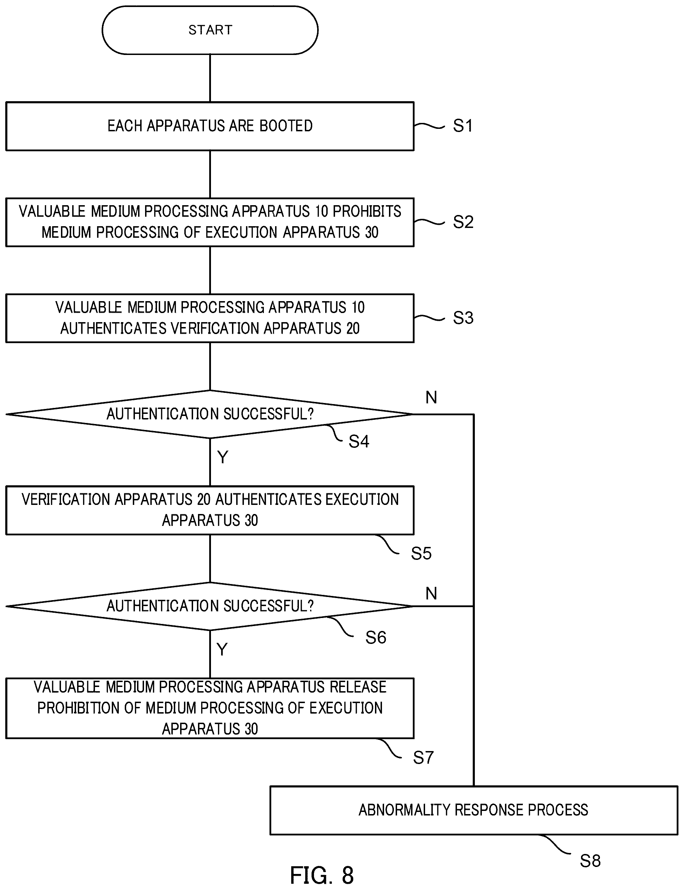

FIG. 8 is a flowchart for describing an operation example of the valuable medium processing system 100. Note that, at the start of FIG. 8, all apparatuses included in the valuable medium processing system 100 are not in a booted state (are in a shut-down state).

In step S1, each apparatus included in the valuable medium processing system 100 is booted. Each apparatus is booted by a system administrator by pressing a power button or the like of each apparatus, for example. As described above, the valuable medium processing apparatus 10 is booted in a secure state by the secure boot function. Alternatively, each apparatus may be booted automatically by a timer or the like. Alternatively, each apparatus may be booted automatically in response to the boot of the valuable medium processing apparatus 10.

Note that, in a case where the secure boot function of the valuable medium processing apparatus 10 cannot be booted in step S1, the process may end without performing any of the process in step S2 and subsequent steps, or the process may proceed to the process in step S8.

In step S2, the valuable medium processing apparatus 10 immediately after the boot executes an execution prohibition process of prohibiting the medium process executed by the execution apparatus 30. Specifically, the valuable medium processing apparatus 10 transmits an execution prohibition command to each execution apparatus 30 to prohibit the medium processing. This prevents the execution apparatus 30 from executing the medium process.

In step S3, the valuable medium processing apparatus 10 performs the authentication process (first authentication process) of the verification apparatus 20. The first authentication process for the verification apparatus 20 by the valuable medium processing apparatus 10 is, as described above, an authentication process using TLS mutual authentication, for example.

In step S4, in a case where the first authentication process in step S3 is successful (step S4: Y), the process proceeds to step S5. In a case where the first authentication process is not successful (step S4: N), the process proceeds to step S8.

In step S5, the verification apparatus 20 performs the authentication process (second authentication process) of the execution apparatus 30. As described above, the second authentication process for the execution apparatus 30 may include verification of the vulnerability of the execution apparatus 30 by the verification apparatus 20. The verification of the vulnerability of the execution apparatus 30 is a verification of the vulnerability of software executed in the execution apparatus 30. The verification apparatus 20 transmits the result of the authentication to the valuable medium processing apparatus 10.

In step S6, in a case where the second authentication process in step S5 is successful (step S6: Y), the process proceeds to step S7. In a case where the second authentication process for any of execution apparatuses 30 is not successful (step S6: N), the process proceeds to step S8.

In step S7, the valuable medium processing apparatus 10 executes a prohibition release process of releasing the execution prohibition process. Specifically, the valuable medium processing apparatus 10 transmits a prohibition release command to each execution apparatus 30. Thus, the execution apparatus 30 can execute the medium process in response to a user's operation or the like.

In step S8, the valuable medium processing apparatus 10 executes an abnormality response process. The abnormality response process includes at least one of a notification process and an operation prohibition process. Note that the abnormality includes three types of events: a failure in boot of the valuable medium processing apparatus 10, a failure in the authentication process of the verification apparatus 20, and a failure in any of the authentication processes of the execution apparatus 30.

### Notification Process

The notification process is a process in which at least one apparatus confirmed to be valid among the apparatuses of the valuable medium processing system 100 notifies the system administrator a detection of an apparatus that is not valid. The term "not valid" means that the valuable medium processing apparatus 10 cannot be booted by the secure boot function, that the verification apparatus 20 or the execution apparatus 30 has been tampered with by a third party, that there is a possibility of impersonation of the verification apparatus 20 or the execution apparatus 30, or that the software operating on the execution apparatus 30 has a vulnerability (does not have sufficient security).

In the notification process, for example, the valuable medium processing apparatus 10 performs notification to the system administrator using a UI unit or an external notification apparatus. Alternatively, the verification apparatus 20 that has successfully authenticated by the valuable medium processing apparatus 10 or the execution apparatus 30 that has successfully authenticated by the verification apparatus 20 may perform the notification. The details of the notification include, for example, information for recognizing the apparatus in which the abnormality has occurred (such as equipment ID, installation location, and the like), information on the time at which the abnormality has been detected (such as date and time, and the like), and information on the details of the abnormality (such as the valuable medium processing apparatus 10 cannot be booted, the authentication of the verification apparatus 20 or the execution apparatus 30 has failed, or the vulnerability of the execution apparatus 30 has been confirmed, and the like). The notification may be performed by various methods, such as displaying on a display device, sounding by a voice output device, or sending an email to a system administrator or an external management apparatus.

For example, in a case where the verification apparatus 20 has been successfully authenticated but a vulnerability in a certain the execution apparatus 30 is detected, the verification apparatus 20, which is easily accessible to the system administrator, may notify the system administrator. In this case, since no notification is made to the general user, the system administrator can take action without the general user being aware the detection of the vulnerability in the execution apparatus 30.

### Operation Prohibition Process

The operation prohibition process is a process of prohibiting the subsequent operations of each apparatus included in the valuable medium processing system 100.

The valuable medium processing system 100 may prohibit the operation of all apparatuses regardless of the type of detected abnormality. Alternatively, the valuable medium processing system 100 may determine the apparatus for which the operation is prohibited according to the type of abnormality. Alternatively, the valuable medium processing system 100 may determine the apparatus for which the operation is prohibited on the basis of the details of the abnormality.

For example, in a case where the valuable medium processing apparatus 10 cannot be booted, the valuable medium processing system 100 prohibits further operations of all apparatuses.

In a case where the first authentication process for the verification apparatus 20 by the valuable medium processing apparatus 10 fails, the valuable medium processing system 100 may prohibit further operations of all apparatuses, or may prohibit the operations of apparatuses other than the valuable medium processing apparatus 10, that is, the verification apparatus 20 and all execution apparatuses 30.

In the second authentication process for the execution apparatus 30 by the verification apparatus 20, in a case where the authentication of any of execution apparatuses 30 fails, the valuable medium processing system 100 may prohibit further operations of all apparatuses, the operations of all execution apparatuses 30, or the operation of only the execution apparatus 30 that failed the authentication.

In the verification of the vulnerability of the execution apparatus 30 by the verification apparatus 20, in a case where a vulnerability is confirmed in any the execution apparatus 30, it is possible to prohibit further operations of all apparatuses, the operations of all execution apparatuses 30, or the operation of only the execution apparatus 30 with the vulnerability confirmed.

The valuable medium processing system 100 may determine to prohibit the execution of a function or the operation of an apparatus that requires higher security based on a combination of two elements of the type of the apparatus or the function of the apparatus.

Regarding the type of apparatus as an element, an apparatus that directly handles a valuable medium is required to have higher security. That is, the valuable medium processing apparatus 10 and the execution apparatus 30 as another valuable medium processing apparatus are apparatuses that require the highest security. The execution apparatus 30, which can send a dispensing instruction to the valuable medium processing apparatus 10, is the apparatus that requires the next highest level of security. The verification apparatus 20 and the execution apparatus 30, which are connectable to a public network, are apparatuses that require the next highest level of security. The execution apparatus 30, which may handle confidential information such as personal information and serves as an operation device that receives inputs such as a card reader or a personal identification number, is the next apparatus that requires a high level of security. The execution apparatus 30 as another peripheral device (such as a display device or a printer) is an apparatus that does not require relatively high security.

Regarding the function of the apparatus as an element, in the valuable medium processing apparatus 10 and the execution apparatus 30 as another valuable medium processing apparatus, a higher security is required for the function of dispensing the valuable medium out of the apparatus. That is, the dispensing or collecting process by the valuable medium processing apparatus 10 as a banknote processing apparatus and the valuable medium sending process by the execution apparatus 30 as another valuable medium processing apparatus are functions that require the highest security. The depositing or replenishment process by the valuable medium processing apparatus 10 as a banknote processing apparatus and the acceptance process of a valuable medium by the execution apparatus 30 as another valuable medium processing apparatus are functions that require the next highest level of security. The maintenance function, including the data collecting process such as examination and recognition of the accepted valuable medium, is the function that requires the next highest level of security.

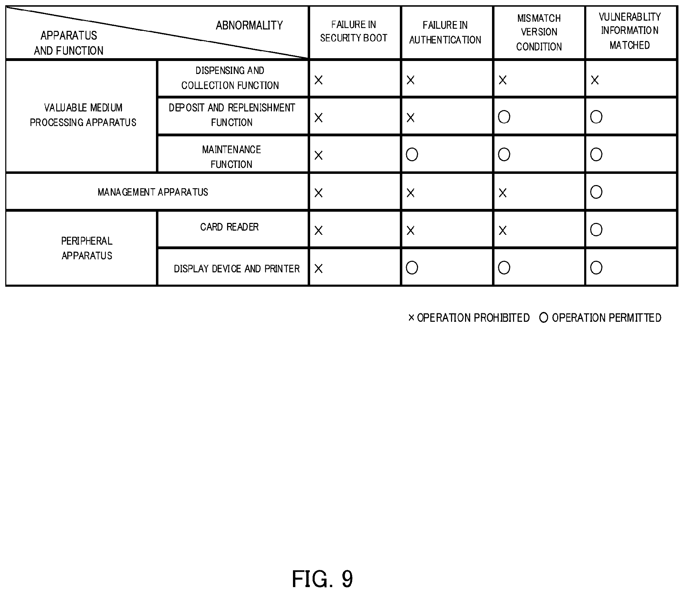

FIG. 9 is a diagram illustrating an example regarding whether to prohibit the function of each apparatus depending on the type of abnormality in the operation prohibition process. In the example illustrated in FIG. 9, in a case where the boot of the valuable medium processing apparatus 10 using the secure boot function fails, all functions that may be provided in the valuable medium processing apparatus 10 and the execution apparatus 30 are prohibited. Further, in a case where the authentication of the verification apparatus 20 fails, operations other than some functions that require only relatively low security are prohibited. Further, in the verification of the vulnerability of the execution apparatus 30 by the verification apparatus 20, more functions are allowed to operate in a case where the version of the software does not match the condition (for example, the version is old) and in a case where the software matches the vulnerability information obtained from the vulnerability information database.

In this manner, in a case where an abnormality is detected, it is possible to ensure higher security in the entire system by prohibiting all or part of the functions of each apparatus in the valuable medium processing system 100. Further, by changing the apparatus or function to be prohibited based on the type of abnormality, it is possible to take a flexible response in accordance with the required security.

### Actions and Effects

As described above, the valuable medium processing system 100 according to the first embodiment of the present disclosure includes the valuable medium processing apparatus 10 that has a secure boot function and executes the first medium process related to a valuable medium, the execution apparatus 30 that executes the second medium process, and the verification apparatus 20. After booted by the secure boot function, the valuable medium processing apparatus 10 executes the first authentication process of authenticating the verification apparatus 20, and in a case where the first authentication process is successful, the verification apparatus 20 starts the second authentication process of authenticating the execution apparatus.

In a case where all apparatuses included in the system have a secure boot function, the security of the entire system can be further enhanced, but the installation cost of the system increases. According to the valuable medium processing system 100 of the present disclosure, only the valuable medium processing apparatus 10 among the plurality of apparatuses included in the system has a secure boot function, and thus, it is possible to suppress an increase in the cost of the entire system. In addition, in the valuable medium processing system 100 in which different software operates in each of a plurality of apparatuses included in the system, the security at the time of booting of the valuable medium processing apparatus 10 can be ensured by the secure boot function, the security of the verification apparatus 20 can be ensured by the authentication process, and further, the security of the execution apparatus 30 can be ensured by the authentication process by the verification apparatus 20, and thus, it is possible to significantly improve the security of a plurality of software operating in the system.

Further, according to the valuable medium processing system 100 of the first embodiment of the present disclosure, when the execution apparatus 30 is authenticated by the authentication of the verification apparatus 20 that has succeeded in the authentication in the authentication process, the prohibition release process of releasing the prohibition command is executed.

With such a configuration, the valuable medium processing apparatus 10 that has been booted in a secure state performs authentication of the verification apparatus 20, and if the authentication is successful, the verification apparatus 20 further performs the authentication of the execution apparatus 30, thereby allowing for a significant enhancement in security compared to a case where the security check is not performed in multiple stages.

Further, according to the valuable medium processing system 100 of the first embodiment of the present disclosure, the main circuit board 155 necessary for executing the secure boot function is provided inside the safe 12 in the valuable medium processing apparatus 10. With such a configuration, a third party cannot access the main circuit board 155, cannot rewrite the basic software or boot data necessary for executing the secure boot function, and cannot perform any operation on the processor 170 that executes the secure boot function. In this manner, the high security of the boot is ensured by the secure boot function of the valuable medium processing apparatus 10.

### Second Embodiment

In the above-described first embodiment, the valuable medium processing system 100 includes the valuable medium processing apparatus 10, the verification apparatus 20, and the execution apparatus 30 that are independent apparatuses. In the second embodiment described below, the verification unit and the execution unit are integrally incorporated into the valuable medium processing apparatus. The valuable medium processing apparatus has a secure boot function. The execution unit executes the medium process related to a valuable medium. The verification unit verifies the vulnerability of the execution unit.

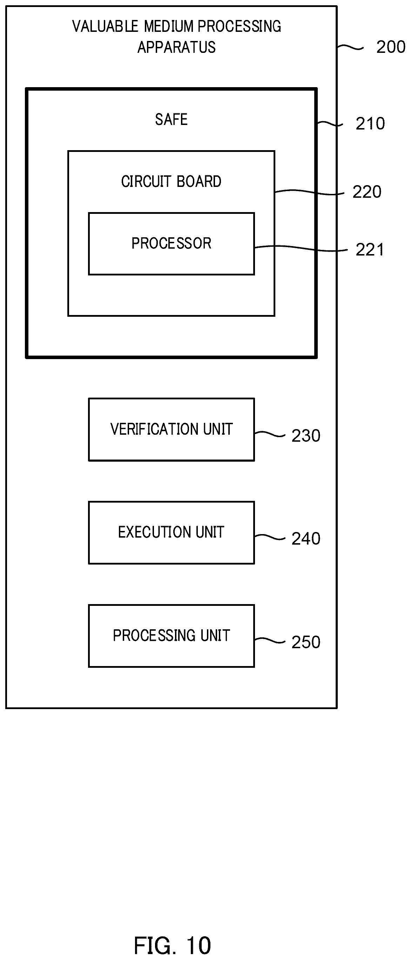

FIG. 10 is a block diagram illustrating an exemplary functional configuration of a valuable medium processing apparatus 200 according to the second embodiment. The valuable medium processing apparatus 200 includes a safe 210, a circuit board 220 on which a processor 221 that executes various processes is mounted, a verification unit 230, and an execution unit 240.

Note that, the valuable medium processing apparatus 200 may further include a processing unit 250. In the example illustrated in FIG. 10, the components of the valuable medium processing apparatus 200, excluding the safe 210, the circuit board 220, the processor 221, the verification unit 230, and the execution unit 240, are collectively represented as the processing unit 250.

Inside the safe 210, a container for storing valuable medium is disposed. The circuit board 220 is provided inside the safe 210. The safe 210 protects the circuit board 220 at a security level equal to or higher than a predetermined level.

The circuit board 220 is equipped with the processor 221 that executes the secure boot function of the valuable medium processing apparatus 200, the authentication process of the verification unit 230, the execution prohibition process of the execution unit 240, and the prohibition release process of the execution unit 240.

In a case where the authentication process of the verification unit 230 by the processor 221 is successful, the verification unit 230 has a function of performing the authentication of the execution unit 240. The authentication of the execution unit 240 by the verification unit 230 is the same as the second authentication process of the execution apparatus 30 by the verification apparatus 20 in the first embodiment.

In the example illustrated in FIG. 10, only one execution unit 240 is illustrated, but the valuable medium processing apparatus 200 may include a plurality of execution units 240. The execution unit 240 has a function of executing various medium processes. Further, in a case where the execution unit 240 receives an execution prohibition command accompanying the execution prohibition process by the processor 221, the execution unit 240 prohibits the execution of the medium process. Further, in a case where the execution unit 240 receives a prohibition release command accompanying the prohibition release process by the processor 221, the execution unit 240 executes the medium process based on a user operation or the like thereafter.

The execution unit 240 may have functions as a UI unit of the valuable medium processing apparatus 200, such as an operation reception function by a user or a system administrator, a display function of various information, and the like.

The processing unit 250 is a unit that executes processes other than the secure boot function, the authentication process of the verification unit 230, the execution prohibition process of the execution unit 240, and the prohibition release process of the execution unit 240 in the valuable medium processing apparatus 200. The processing unit 250 may include configurations other than the safe 12 and the main circuit board 155 among the configurations included in the valuable medium processing apparatus 10 in the first embodiment.

For example, in a case where the processing unit 250 has a function of executing a medium process related to banknotes among valuable media, the execution unit 240 may have a function of executing a medium process related to valuable media other than banknotes. For example, the valuable medium processing apparatus 200 may include an execution unit 240 that executes the medium process related to coins and an execution unit 240 that executes the medium process related to checks.

In this manner, even in a configuration in which one valuable medium processing apparatus 200 includes the circuit board 220 provided inside the safe 210, the verification unit 230, and the execution unit 240, the processor 221 mounted on the circuit board 220 has a function of executing the secure boot function of the valuable medium processing apparatus 200, the authentication process of the verification unit 230, the execution prohibition process of the execution unit 240, and the prohibition release process of the execution unit 240, and thus, it is possible to significantly improve the security of a plurality of software operating in the system.

## Claims

1. A valuable medium processing apparatus having a secure boot function and executing a first medium process related to a valuable medium, the valuable medium processing apparatus comprising:
a safe in which a container that stores the valuable medium is disposed inside; and
a circuit board arranged inside the safe and equipped with a processor, the processor being configured to:
execute an execution prohibition process of transmitting a prohibition command of prohibiting execution of a second medium process related to the valuable medium to an execution apparatus that executes the second medium process, and
execute a prohibition release process of releasing the prohibition command in a case where a validity of the execution apparatus is confirmed.

2. The valuable medium processing apparatus according to claim 1,
wherein the processor further executes a first authentication process of authenticating a verification apparatus, and verifies the validity of the execution apparatus based on a result of a second authentication process of the execution apparatus, the second authentication process being executed by the verification apparatus that has succeeded in an authentication in the first authentication process.

3. The valuable medium processing apparatus according to claim 1,
wherein the authentication of the verification apparatus in the first authentication process is performed using an digital certificate.

4. The valuable medium processing apparatus according to claim 2 or 3,
wherein the authentication of the verification apparatus in the first authentication process is performed by transport layer security mutual authentication.

5. The valuable medium processing apparatus according to any one of claims 2 to 4,
wherein the authentication of the verification apparatus in the first authentication process is performed using a hash value of predetermined data.

6. The valuable medium processing apparatus according to any one of claims 2 to 5,
wherein in a case where the validity of the execution apparatus is not confirmed in the second authentication process, the processor executes a notification process of notifying an occurrence of an abnormality in the verification.

7. The valuable medium processing apparatus according to any one of claims 2 to 6,
wherein the processor causes the verification apparatus to execute at least one of the execution prohibition process and the prohibition release process.

8. The valuable medium processing apparatus according to any one of claims 2 to 7,
wherein the circuit board is further equipped with a storage unit, the storage unit having tamper resistance and configured to store boot data used for executing the secure boot function.

9. A processing method for a valuable medium processing system including a valuable medium processing apparatus having a secure boot function and executing a first medium process related to a valuable medium, an execution apparatus executing a second medium process related to the valuable medium, and a verification apparatus, the processing method comprising:
executing, by the valuable medium processing apparatus, a first authentication process of authenticating the verification apparatus after the valuable medium processing apparatus is booted by the secure boot function; and
starting, by the verification apparatus, a second authentication process of authenticating the execution apparatus when the first authentication process is successful.

10. The processing method according to claim 9, the processing method further comprising:
executing, by the valuable medium processing apparatus, an execution prohibition process of prohibiting an execution of the second medium process by the execution apparatus until the second authentication process by the verification apparatus is completed.

11. The processing method according to claim 9 or 10, the processing method further comprising:
performing, by the verification apparatus, verification related to a vulnerability of software executed in the execution apparatus as the second authentication process.

12. The processing method according to claim 11, the processing method further comprising:
performing, by the verification apparatus, verification related to a version of the software as the verification related to the vulnerability of the software.

13. The processing method according to claim 11 or 12, the processing method further comprising:
performing, by the verification apparatus, the verification related to the vulnerability of the software based on vulnerability information acquired via a public network.

14. The processing method according to any one of claims 10 to 13,
wherein the second medium process executed by the execution apparatus is a process related to a valuable medium of a type different from the valuable medium in the first medium process.
